# EUROPEAN PATENT APPLICATION

(11) **EP 4 534 834 A1**
(43) Date of publication of application: **09.04.2025**
(21) Application number: 22944724.8
(22) Date of filing: 03.06.2022
(51) Int. Cl.: F03D 1/06, F03D 1/04, F03D 9/25

(54) **HORIZONTAL-AXIS WIND TURBINE**

(71) Applicant: Holostovs, Aleksejs, 1067 Riga (LV)
(72) Inventor: Holostovs, Aleksejs, 1067 Riga (LV)
(74) Representative: Vitina, Maruta
(86) International application number: PCT/IB2022/055185
(87) International publication number: WO 2023/233188

(57) **Abstract**

The invention relates to wind power engineering, and more particularly to a horizontal axis wind turbine capable of operating at relatively low wind speeds. In the present horizontal axis wind turbine, each blade (1) has mounted on its rear side relative to the wind direction, in a region between the tip of the blade (1) and the lengthwise centre of the blade (1) and between the leading edge of the blade and the widthwise centre of the blade (1), a tangential fan (6) arranged so as to be capable of directing an additional air flow from the region of the leading edge of the blade (1) toward the trailing edge of the blade (1).

## Description

The invention relates to wind power engineering, namely to wind power turbines with a horizontal axis of rotation of the rotor, which are capable of operating at relatively low wind speeds, while continuing to generate electricity, and can be used to generate electricity in private farms, industries and wind farms.

Wind turbines use wind energy to produce electricity. Horizontal axis wind turbines typically start to rotate when the wind speed is about 3-4 m/s or higher. This is partly due to the weight of the turbine blades as well as partly due to the friction in the gears between the turbine blade shaft and the generator. Therefore, modern wind turbines usually do not use wind energy at a speed of less than 3-4 m/s.

Wind turbines typically include a rotor having a plurality of blades that convert wind energy into rotational motion of the drive shaft, which in turn is used to drive an electric generator to generate electricity. For example, a wind power generation system [International Application WO1995021326A1] is known, which includes: a wind turbine with a rotor with a horizontal axis of rotation mounted on a bearing and capable of rotating about a vertical axis, a primary power unit, a mechanical transmission with a gearbox, and a system for rotating a wind turbine around a vertical axis. A gearbox of a mechanical transmission, the output of which is made in the form of two coaxial shafts, the kinematic connection of which with the input shaft of the gearbox provides rotation of the coaxial shafts in opposite directions. It has a primary power unit in the form of two interacting working elements rotating in opposite directions, each of which is connected to one of the coaxial shafts of the gearbox. The design of the system compensates for the reactive moment acting on the windmill in the horizontal plane, without the need for additional energy-intensive mechanisms.

Technical solutions are known that are aimed at ensuring the possibility of operating wind turbine devices at lower wind speeds.

For example, in the published application [US20130309081A1], it is proposed to use a diffuser that compresses the air flow in the rotor plane, and the air flow expands later after exiting the diffuser. The energy that can be extracted from the air is proportional to the area upstream of the flow where the air flow begins in the uncompressed state.

A small horizontal axis of rotation (HAWT) wind turbine is known [Seralathan Sivamani, et al., "Experimental data on analysis of a horizontal axis small wind turbine with blade tip power system using permanent magnetic generator", Data in Brief, vol. 23, pp. 103716, 2019] with a blade end feed system (BTPS) using a permanent magnet generator. In this HAWT with BTPS, a generator with permanent magnets is used, while friction losses and other losses are significantly reduced. This is reflected in the plan of the dimensionless coefficient of electric power, and the values of the coefficient of mechanical and electric power are close to each other. Such a wind turbine can rotate uninterruptedly at low wind speed, while the cost of electricity to ensure rotation in the absence of wind is low.

The technical problem solved by the present invention is the creation of a wind turbine that works effectively in low winds, using wind, starting from a speed of 0.1 m/s.

In a wind turbine with a horizontal axis of rotation of the rotor with blades made with an aerodynamic profile; wherein the rotor is connected by an axis with the generator and together form a nacelle assembly, which is fixed on the rotary mechanism mounted on the mast, according to the invention, on each blade, on its rear side relative to the wind direction, in the area between the end of the blade and the middle of the blade along the length, between the front edge of the blade and the middle of the blade along the width, a tangential fan is mounted to direct additional air flow from the region of the front edge of the blade to the rear edge of the blade; said tangential fan is rigidly fixed on the blade.

Tangential fans mounted on each blade, directing the airflow towards the trailing edge of the blade, creating an additional airflow flowing around the top of the blade, thereby increase the lifting force acting on the blade. If the blade is driven by wind (even at low wind speed) or other effects, the tangential fan can rotate without an electric motor.

Each tangential fan can be connected to an electric motor for rotating the rotor of the tangential fan.

Tangential fans, which rotate due to the electric drive, create an additional wind flow on one side of the blade, including when the wind is still, which ultimately significantly increases the rotor torque of the wind turbine. The blades of the wind turbine, on which tangential fans are installed, continue to rotate at low wind speed (with non-industrial wind at a speed of less than 3 m/s) and even in the complete absence of wind. Although the tangential fan consumes electricity, these costs are insignificant, yet the uninterrupted rotation of the rotor of the wind turbine is ensured. This allows to capture even the weakest wind, since it is not needed to accelerate the rotor again every time, even after a break in rotation due to calmness of the wind, thereby avoiding inertial losses. A significant increase in torque occurs due to the fact that the tangential fan has a large working area of the blades and this, with insignificant electricity consumption, significantly accelerates the air flow flowing around the upper part of the blade.

The wind turbine can be made in such a way that the tangential fan is rigidly attached to the blades by at least the end elements of the tangential fan, the axis of the rotor of the tangential fan is fixed in the end elements of the tangential fan; a rounded screen covering no more than half the height of the tangential fan is attached to the end elements of the tangential fan in the lower part of the tangential fan on the side of the front edge of the blade along the entire length of the tangential fan. The rounded screen serves to shield the air flow, which would inhibit the rotation of the tangential fan. The tangential fan and the rounded screen must be placed on the blade in such a way that air flow can pass between them and the surface of the blade. One of the options in which this is provided is the attachment of the tangential fan to the blades by at least the end elements of the tangential fan and the attachment of the rounded screen to the end elements of the tangential fan.

A guide bar can be mounted above the tangential fan along its entire length on the side of the rear edge of the blade at an angle of 5-45 degrees relative to the imaginary line passing on the blade through its outermost points of the front edge and the rear edge. The guide bar directs the airflow towards the trailing edge of the blade, thereby increasing the lifting force acting on the blade.

The wind turbine can be provided with a diffuser attached by means of fasteners to the nacelle assembly, wherein the diffuser is configured to create an air flow pressure difference between the front part of the diffuser and the rear part of the diffuser. The diffuser serves to accelerate the air flow in the rotor rotation zone of the wind turbine. The presence of a diffuser in a wind turbine enhances the effect created by tangential fans. The diffuser, accelerating the wind flow in the zone of rotation of the blades, contributes to the achievement of the nominal values of the generation of the wind turbine, with lower electricity consumption by tangential fans, since the accelerated wind flow helps the rotation of the rotor of the tangential fan. Ultimately, this interaction leads to the summation of the effects, since it provides greater pumping (direction) of the air flow over the upper part of the blade.

The diffuser can be made in the form of a truncated cone passing into the cylinder, wherein the ratio of the diameter of the cylinder to the diameter of the base of the cone is from 0.5 to 0.7, wherein the ratio of the distance from the beginning of the transition of the cylinder into the cone to the base of the cone to the diameter of the base of the cone is from 8.0 to 8.5.

The diffuser may be foldable in high winds. If the diffuser is foldable, this makes it possible to perform it with large geometric dimensions, since the foldable diffuser is less susceptible to destruction in strong winds and hurricanes.

The wind turbine can be provided with a brushless electromagnetic motor, wherein the function of the rotor of the electromagnetic motor is performed by the rotor of the wind turbine, and the stator of the electromagnetic motor is formed by a number of coils that are fixed on the inner side of the diffuser cylinder, and permanent magnets are attached to the ends of the blades. The electromagnetic motor provides continuous rotation of the rotor with minimal power consumption. In the case of a brushless electromagnetic motor in the wind turbine, it is not necessary to install electric motors to rotate the rotors of the tangential fans, since the brushless electromagnetic motor can ensure the uninterrupted rotation of the rotor of the wind turbine sufficient to rotate the tangential fans, even in the absence of wind.

Solar panels with batteries for powering electric motors for rotating rotors of tangential fans can be installed on the blades. In this case, the wind turbine works even in the complete absence of wind.

The proposed wind turbine makes it possible to increase the efficiency of using wind flow several times and makes electricity generation practically independent of wind discreteness.

The proposed invention is explained by drawings, wherein is shown:
On Fig. 1 - wind turbine - rear view;
On Fig. 2 - blade with a tangential fan installed on it - schematic image (in section);
On Fig. 3 - wind turbine with a diffuser - rear view;
On Fig. 4 - diffuser - side view.

The present invention is explained by examples of its specific implementation.

### Example 1.

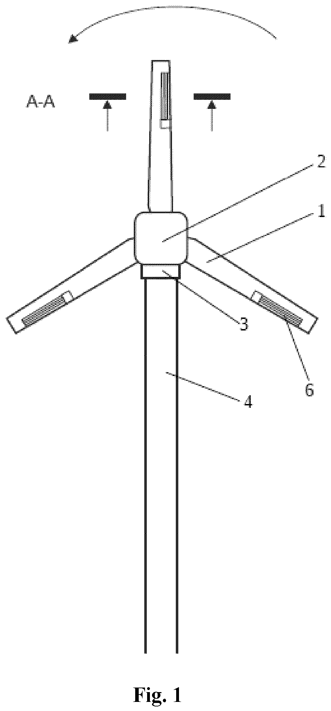

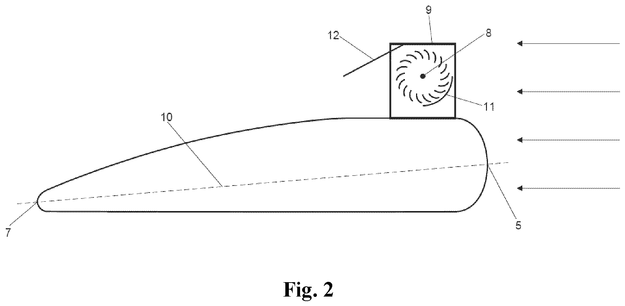

Wind turbine (Fig. 1) with a horizontal axis of rotation of the rotor, that has a rotor with blades 1 made with an aerodynamic profile. The rotor of the wind turbine is connected by an axis with the generator and together form the nacelle assembly 2, which is fixed on the rotary mechanism 3 mounted on the mast 4. On each blade 1 (FIG. 2), on its rear side relative to the wind direction, in the area between the end of the blade 1 and the middle of the blade 1 along the length, between the front edge 5 of the blade 1 and the middle of the blade 1 along the width, a tangential fan 6 is mounted with a possibility to direct additional air flow to the rear edge 7 of the blade 1. The tangential fan 6 is rigidly fixed to the blade 1 and is connected to an electric motor (not shown in FIG.) for rotating the rotor 8 of the tangential fan 6. The tangential fan 6 is rigidly attached to the blades 1 by the end elements 9 of the tangential fan 6. The rotor axis 8 of the tangential fan 6 is fixed in the perforated end elements 9 of the tangential fan 6. A rounded screen 11 covering no more than half the height of the tangential fan 6 is attached to the perforated end elements 9 of the tangential fan 6 in the lower part of the tangential fan 6 on the side of the front edge 5 of the blade 1, along the entire length of the tangential fan 6. A guide bar 12 is mounted above the tangential fan 6 along its entire length on the side of the rear edge 7 of the blade 1 at an angle of 30 degrees relative to the imaginary line 10 passing on the blade 1 through the outermost points of its front edge 5 and the rear edge 7.

The wind turbine works as follows.

When the wind affects on the blade 1, a low pressure zone is formed due to the aerodynamic profile on one side of the blade 1. The difference in air pressure on both sides of the blade 1 creates a lifting force, which is enhanced by the angle of attack of the blade 1. The lifting force is greater than the drag of the wind acting on the blade 1, and this causes the rotor to rotate. The tangential fans 6 mounted on each blade 1 are directing by pumping an airflow from the zone of the leading edge 5 of the blade 1 towards the trailing edge 7 of the blade 1 and create an additional airflow flowing around the top of the blade 1, thereby increasing the lift exerted on the blade 1. Tangential fans 6, which rotate due to the electric drive, create an additional wind flow on one side of the blade, including when the wind is still, which ultimately significantly increases the rotor torque of the wind turbine. The blades 1 of the wind turbine, on which tangential fans are installed, rotate at low wind speed (with non-industrial wind at a speed of less than 3 m/s) and even in the complete absence of wind. Tangential fans 6 with relatively low electricity consumption accelerate the natural wind flow and ensure the constant rotation of the rotor in the absence of wind. Although the tangential fan 6 consumes electricity, these costs are insignificant, yet ensure the uninterrupted rotation of the rotor of the wind turbine. A significant increase in torque occurs due to the fact that the tangential fan 6 has a large working area of the blades. The tangential fans 6 pump an airflow from the zone of the leading edge 5 of the blade 1 towards the trailing edge 7 of the blade 1, thereby significantly enhancing the aerodynamic effect and accordingly increasing the generation of electricity by the wind turbine.

### Example 2.

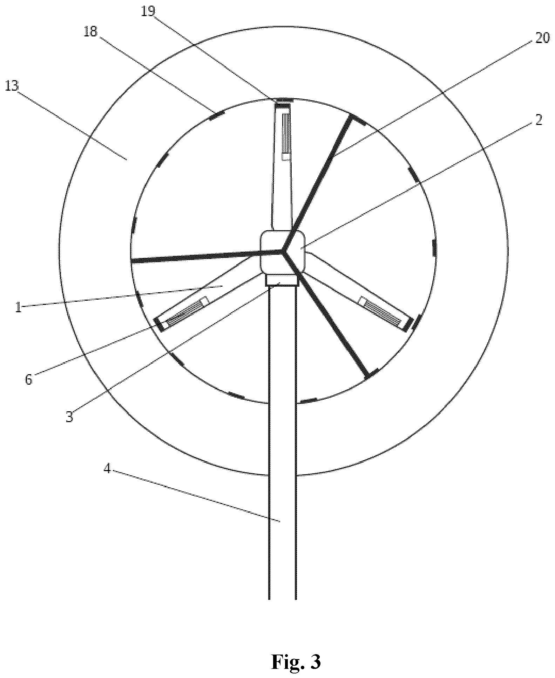

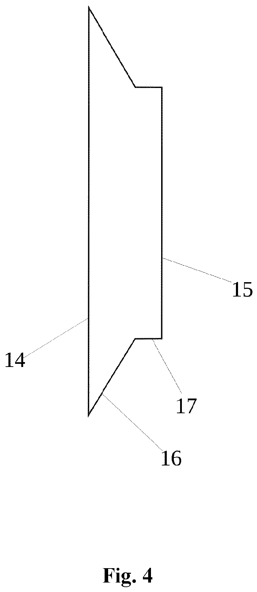

Wind turbine (Fig. 3) is similar to the wind turbine described in Example 1. The wind turbine is additionally provided with a diffuser 13 attached by means of fasteners 20 to the nacelle assembly 2. Diffuser 13 (FIG. 4) is configured to create an air flow pressure difference between the front part 15 of the diffuser 13 and the rear part 14 of the diffuser 13. The diffuser 13 is made in the form of a truncated cone 16 passing into the cylinder 17, wherein the ratio of the diameter of the cylinder 17 to the diameter of the base of the cone 16 is 0.6 at the ratio of the distance from the beginning of the transition of the cylinder into the cone to the base of the cone to the diameter of the base of the cone 8.3. Wind turbine (Fig. 3) is provided with a brushless electromagnetic motor, wherein the function of the rotor of the electromagnetic motor is performed by the rotor of the wind turbine, and the stator of the electromagnetic motor is formed by a number of coils 18 that are fixed on the inner side of the cylinder 17 of the diffuser 13, and permanent neodymium magnets 19 are attached to the ends of the blades 1.

The wind turbine works similarly as described in Example 1. The wind turbine is additionally provided with a diffuser 13, wherein the diffuser 13 creates air flow swirls that contribute to the formation of a low pressure region behind the diffuser 13 and thereby accelerates the wind flow in the rotor rotation zone. The brushless electromagnetic motor does not have a housing and operates due to the interaction of electromagnetic coils 18 with permanent magnets 19. The brushless electromagnetic motor provides constant rotation of the rotor, with the application of an impulse at the farthest point from the center of the rotor. In fact, the stator of the electromagnetic motor is formed by a number of coils 18 that are fixed to the diffuser 13 along its diameter, and the rotor of the motor is a rotor of a wind turbine with permanent magnets 19 attached to the ends of the blades 1. At the moment when the permanent magnet 19 enters the zone of attraction of the magnetic coil 18, power is supplied to the coil 18, which, having a polarity opposite to the magnet 19, attracts the permanent magnet 19. And at the moment when the permanent magnet 19 reaches the middle of the coil 18, the power is interrupted until the next cycle.

### Example 3.

Wind turbine (Fig. 3) is similar to the wind turbine described in Example 2, only the wind turbine does not have electric motors to rotate the rotor 8 of the tangential fans 6, since the brushless electromagnetic motor can ensure the uninterrupted rotation of the rotor of the wind turbine sufficient to rotate the tangential fans, even in the absence of wind. In addition, the diffuser 13 is configured to fold the truncated cone 16 into the shape of a cylinder. This is used to reduce the risk of damage and destruction to the wind turbine structure in high winds or hurricanes.

## Claims

1. Wind turbine with a horizontal axis of rotation of the rotor with blades (1) made with an aerodynamic profile; wherein the rotor is connected by an axis with the generator and together form a nacelle assembly (2), which is fixed on the rotary mechanism (3) mounted on the mast (4), **characterized in that** on each blade (1), on its rear side relative to the wind direction, in the area between the end of the blade (1) and the middle of the blade (1) along the length, between the front edge (5) of the blade (1) and the middle of the blade (1) along the width, a tangential fan (6) is mounted to direct additional air flow from the region of the front edge (5) of the blade (1) to the rear edge (7) of the blade (1); said tangential fan (6) is rigidly fixed on the blade (1).

2. The wind turbine according to claim 1, **characterized in that** each tangential fan (6) is connected to an electric motor for rotating a rotor (8) of the tangential fan (6).

3. The wind turbine according to claim 1 or 2, **characterized in that** the tangential fan (6) is rigidly attached to the blades (1) by at least the end elements (9) of the tangential fan (6), the axis of the rotor (8) of the tangential fan (6) is fixed in the end elements (9) of the tangential fan (6); a rounded screen (11) covering no more than half the height of the tangential fan (6) is attached to the end elements (9) of the tangential fan (6) in the lower part of the tangential fan (6) on the side of the front edge (5) of the blade (1) along the entire length of the tangential fan (6).

4. The wind turbine according to one of preceding claims 1-3, **characterized in that** a guide bar (12) is mounted above the tangential fan (6) along its entire length on the side of the rear edge (7) of the blade (1) at an angle of 5-45 degrees relative to the imaginary line (10) passing on the blade (1) through its outermost points of the front edge (5) and the rear edge (7).

5. The wind turbine according to one of preceding claims 1- 4, **characterized in that** it is provided with a diffuser (13) attached by means of fasteners (20) to the nacelle assembly (2), wherein the diffuser (13) is configured to create an air flow pressure difference between the front part (15) of the diffuser (13) and the rear part (14) of the diffuser (13).

6. The wind turbine according to claim 5, **characterized in that** the diffuser (13) is made in the form of a truncated cone (16) passing into the cylinder (17), wherein the ratio of the diameter of the cylinder (17) to the diameter of the base of the cone (16) is from 0.5 to 0.7; wherein the ratio of the distance from the beginning of the transition of the cylinder (17) into the cone (16) to the base of the cone (16) to the diameter of the base of the cone (16) is from 8.3 to 8.5.

7. The wind turbine according to claim 5 or 6, **characterized in that** the diffuser (13) is foldable in high winds.

8. The wind turbine according to one of preceding claims 5-7, **characterized in that** the wind turbine is provided with a brushless electromagnetic motor, wherein the function of the rotor of the electromagnetic motor is performed by the rotor of the wind turbine, and the stator of the electromagnetic motor is formed by a number of coils (18) that are fixed on the inner side of the cylinder (17) of the diffuser (13), and permanent magnets (19) are attached to the ends of the blades (1).

9. The wind turbine according to one of preceding claims 2-8, **characterized in that** solar panels with batteries for powering electric motors for rotating the rotors (8) of the tangential fans (6) are installed on the blades (1).
